(19) Europäisches Patentamt
European Patent Office
Office européen des brevets

(11) **EP 1 497 166 B1**

(12) **FASCICULE DE BREVET EUROPEEN**

(45) Date de publication et mention
de la délivrance du brevet:
**05.09.2007 Bulletin 2007/36**

(21) Numéro de dépôt: **03732630.3**

(22) Date de dépôt: **27.03.2003**

(51) Int Cl.:
***B62D 6/02*** (2006.01)

(86) Numéro de dépôt international:
**PCT/FR2003/000965**

(87) Numéro de publication internationale:
**WO 2003/089287 (30.10.2003 Gazette 2003/44)**

(54) **DISPOSITIF DE COMMANDE DE L'ANGLE DE BRAQUAGE DES ROUES DIRECTRICES D'UN VEHICULE**

LENKWINKELSTEUEREINRICHTUNG FÜR GELENKTE FAHRZEUGRÄDER

DEVICE FOR CONTROLLING THE STEER ANGLE OF STEERED WHEELS OF A VEHICLE

(84) Etats contractants désignés:
**AT BE BG CH CY CZ DE DK EE ES FI FR GB GR HU IE IT LI LU MC NL PT RO SE SI SK TR**

(30) Priorité: **22.04.2002 FR 0204980**

(43) Date de publication de la demande:
**19.01.2005 Bulletin 2005/03**

(73) Titulaire: **RENAULT TRUCKS**
**69800 St Priest (FR)**

(72) Inventeur: **DECHAMP, François**
**F-71250 Cluny (FR)**

(74) Mandataire: **Vuillermoz, Bruno et al**
**Cabinet Laurent & Charras**
**B.P. 32**
**20, rue Louis Chirpaz**
**69134 Ecully Cedex (FR)**

(56) Documents cités:
**DE-C- 19 546 943**

## Description

### Domaine technique :

L'invention se rattache au domaine des systèmes de commande de direction équipant les véhicules automobiles, et notamment les véhicules industriels, tels que les camions.

Elle concerne plus spécifiquement les systèmes de direction dans lesquels le braquage des roues n'est pas obtenu par une transmission mécanique, mais par le biais d'un dispositif mettant en oeuvre un calculateur électronique. Ce type de direction est connu sous l'appellation "Steer by Wire". L'invention concerne plus spécifiquement un mode de fonctionnement de ce type de dispositif permettant entre autres d'assurer une sécurité optimisée de la conduite.

### Techniques antérieures :

De façon générale, les systèmes de direction "Steer by Wire" comprennent un capteur associé au volant qui peut informer un système calculateur de la position angulaire mécanique du volant. Le calculateur compare cette valeur de position du volant avec une valeur de référence, représentative de la position neutre du volant, de manière à déterminer l'angle de rotation qu'a imprimé le conducteur au volant. Cet angle de rotation du volant est ensuite traité par un calculateur pour commander un actionneur agissant sur le système de braquage des roues selon une loi de calcul en fonction de l'angle de rotation du volant. De façon générale, l'angle de braquage des roues est proportionnel à l'angle de rotation du volant selon un coefficient de démultiplication.

On a déjà proposé de corriger la loi de calcul de l'angle de braquage en fonction de différents paramètres de conduite pour tenir compte de certains phénomènes. Ainsi, on a déjà proposé d'augmenter le facteur de démultiplication pour les forts angles de braquage, pour éviter au conducteur d'avoir à imprimer un angle trop important lorsqu'il souhaite effectuer des manoeuvres, dans lesquelles l'angle de braquage de roues est particulièrement important.

On a également proposé de modifier le facteur de démultiplication en fonction de la vitesse du véhicule. Plus précisément, on ajuste ce facteur de démultiplication pour qu'il soit plus élevé à haute vitesse afin d'éviter qu'une faible rotation du volant ne provoque des écarts de trajectoire involontaires. A l'inverse, lorsque le véhicule est à faible vitesse et qu'il est donc possible d'effectuer des manoeuvres ou des changements de direction très marqués, ce coefficient est réduit, pour qu'il ne soit pas nécessaire au conducteur d'avoir à imprimer des angles trop importants au volant.

En pratique, les facteurs de démultiplication sont fonctions de la taille du véhicule. Plus celui ci est lourd, plus la démultiplication est importante. La valeur est de l'ordre de 20 à 23 sur un camion, et il faudra 2.5 tours de volant pour braquer les roues à fond (par rapport à la ligne droite). Pour une voiture, cette valeur est plus faible.

La correction du coefficient de démultiplication en fonction de la vitesse présente certains avantages, mais peut dans certaines conditions provoquer certains désagréments au conducteur. En effet, lorsque le véhicule pénètre dans une courbe avec un angle de braquage des roues déterminé, si il y a une réduction de sa vitesse, celle-ci se traduit donc par une diminution du facteur de démultiplication et ce, sans que le conducteur n'agisse sur son volant. Ainsi, l'angle du volant restant constant, la vitesse diminuant, l'angle de braquage des roues se trouve modifié par un braquage parasite. Ce braquage parasite peut entraîner soit un déport de la trajectoire du véhicule, soit contraindre le conducteur à corriger la trajectoire en agissant sur le volant.

Le problème que se propose de résoudre l'invention est celui de l'existence de ce braquage parasite consécutive à une modification du rapport de démultiplication indépendant de la volonté du conducteur.

### Exposé de l'invention:

L'invention concerne donc un dispositif de commande de l'angle de braquage des roues directrices d'un véhicule dans un système de direction du type "Steer by Wire". Un tel dispositif comporte de manière connue :

- des moyens de détermination de la position angulaire mécanique du volant (φ) du véhicule;
- des moyens de détermination de l'angle de rotation (α) du volant par comparaison de la position angulaire du volant (φ) avec une valeur de référence (β) représentative de la position neutre du volant;
- des moyens de commande d'un actionneur agissant sur l'angle de braquage (θ) des roues directrices selon une loi de calcul fonction de l'angle de rotation du volant (α);
- des moyens de correction aptes à modifier ladite loi de calcul en fonction de la vitesse du véhicule;

Conformément à l'invention, le dispositif de commande comporte également des moyens aptes à modifier en fonction du temps la valeur de référence représentative de la position neutre du volant.

Autrement dit, le principe de l'invention consiste à décaler la position du point neutre du dispositif de direction, qui est alors découplée de la position angulaire d'un point fixe du volant. La position neutre du volant est donc décalée angulairement pour faire en sorte que l'angle de braquage des roues ne soit pas perturbé par des braquages parasites malgré les variations de démultiplication.

En conséquence, le point de référence par rapport auquel est mesurée la rotation du volant se décale, de telle sorte qu'après la modification de ce point de référence, on peut obtenir un angle de braquage nul, bien que le volant ne revienne pas dans la position neutre initiale.

En pratique, l'angle de braquage des roues est calculé comme le quotient de l'angle de rotation du volant par un coefficient de démultiplication, qui peut être lui-même assujetti à différentes variations en fonction de la vitesse, ou bien encore en fonction d'autres paramètres relatifs au fonctionnement du véhicule.

Dans une forme particulière d'exécution, la valeur de référence représentative de la position neutre du volant peut évoluer de telle sorte que sa dérivée par rapport au temps est proportionnelle au produit de la dérivée par rapport au temps du coefficient de démultiplication multipliée par la valeur de l'angle de braquage. Cette loi de correction permet de conserver un angle de braquage des roues constant malgré une diminution de vitesse en courbe.

### Description sommaire des figures

La manière de réaliser l'invention, ainsi que les avantages qui en découlent ressortiront bien de la description du mode de réalisation qui suit, donné à titre d'exemple non limitatif, et à l'appui des figures annexées dans lesquelles :

La figure 1 est une représentation schématique du volant d'un véhicule sur lequel sont représentés les différents angles d'un dispositif de commande selon l'invention

La figure 2 est une représentation schématique du dispositif de commande conformément à l'invention. Les figures 3a, 3b, 3c et 3d sont des représentations schématiques illustrant la modification de la position angulaire du volant et de l'angle de braquage des roues consécutifs, pour 4 phases successives.

### Manière de réaliser l'invention

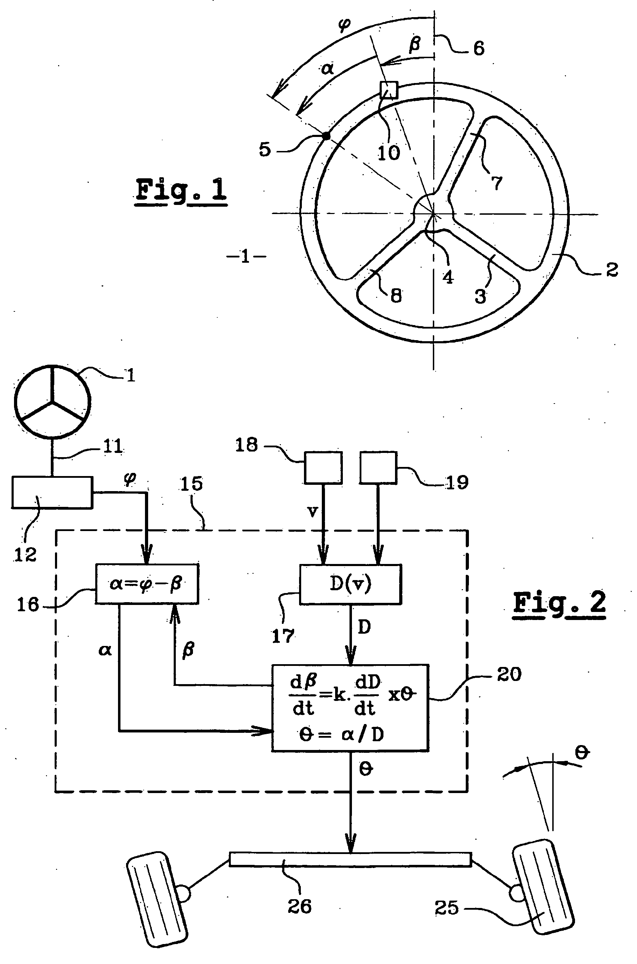

L'invention concerne un dispositif de commande de l'angle de braquage des roues directrices d'un véhicule. Cet angle de braquage est déterminé en fonction de la position du volant du véhicule, dont un exemple est donné à la figure 1. Le volant (1) comprend une circonférence (2) reliée à l'axe de rotation (4) par différents rayons (3). Ces rayons sont illustrés pour matérialiser les différents angles intervenant dans le principe de l'invention, mais ils ne sont en aucun cas nécessaires au fonctionnement du dispositif de commande conforme à l'invention. La position angulaire du volant (1) peut être déterminée en mesurant l'angle ($\varphi$) séparant un point fixe (5) du volant (1) par rapport à une direction fixe du véhicule. Dans la forme illustrée, le point fixe (5) a été situé entre les rayons (7,8) du volant.

Conformément à l'invention, l'angle de braquage des roues est déterminé en fonction de la position du volant, plus précisément par rapport à l'angle de rotation ($\alpha$) du volant (1) mesuré par rapport à un point neutre (10) qui pour des raisons de compréhension est matérialisé par un carré sur le volant. Conformément à l'invention, la position neutre (10) du volant est variable selon l'évolution de la vitesse de l'angle de braquage du véhicule. L'évolution de la position du point neutre peut s'évaluer également par rapport à la direction fixe (6) et être caractérisée par la valeur de l'angle ($\beta$).

Le fonctionnement de l'invention peut être illustré à la figure 2, dans laquelle on observe le volant (1) qui est relié à un dispositif de mesure (12) intégrant par exemple un capteur de rotation, associé à l'axe (11) du volant. La position du point fixe (5) du volant, représentée par l'angle ($\varphi$) est envoyée à destination d'un calculateur (15) représenté en traits pointillés à la figure 2. Ce calculateur (15) comprend un certain nombre de moyens de calcul qui peuvent être matériels et/ou logiciels.

Ce calculateur (15) élabore l'angle de rotation du volant (1) par rapport à la position neutre (10) du volant, en effectuant, dans le bloc (16) la détermination de l'angle ($\alpha$), comme la différence de l'angle ($\varphi$) du point fixe (5) par rapport à l'angle ($\beta$) du point neutre (10) du volant.

Parallèlement, un calculateur élabore au niveau du bloc (17) la valeur du coefficient de démultiplication (D) qui dans la forme illustrée dépend de la valeur de la vitesse (v) du véhicule elle-même mesurée par un tachymètre (18). D'autres grandeurs physiques mesurées par les capteurs (19) peuvent être utilisées par un calculateur (15) pour déterminer le coefficient de démultiplication (D).

Au niveau du bloc référencé (20), le calculateur (15) détermine l'angle de braquage ($\theta$) que peut prendre les roues (25) en fonction de l'angle de rotation ($\alpha$) du volant. Cet angle ($\theta$) est envoyé sous forme d'une consigne à un dispositif de braquage des roues (26) qui agit sur les différents organes mécaniques de liaison aux roues (25) pour obtenir l'angle de braquage ($\theta$) voulu.

Conformément à l'invention, le calculateur effectue comme illustré au bloc (20) la détermination d'une action correctrice sur la valeur de l'angle $\beta$.représentant la position du point neutre du volant. Dans la forme illustrée, la correction est telle que :

$$\frac{d\beta}{dt} = k.\frac{dD}{dt} \cdot \theta(t),$$

où k est un coefficient déterminé en fonction de paramètres propres au véhicule.

La valeur de l'angle $\beta$ est alors déterminée pour pouvoir servir ensuite de mesure de référence à la détermination d'un nouvel angle de rotation du volant tel qu'illustré au bloc (16).

Bien entendu, la représentation des différentes opérations sous forme de blocs est donnée dans un but d'illustration et les différentes opérations peuvent être exécutées au sein d'un même logiciel, ou bien encore en combinant des aspects logiciels et matériels.

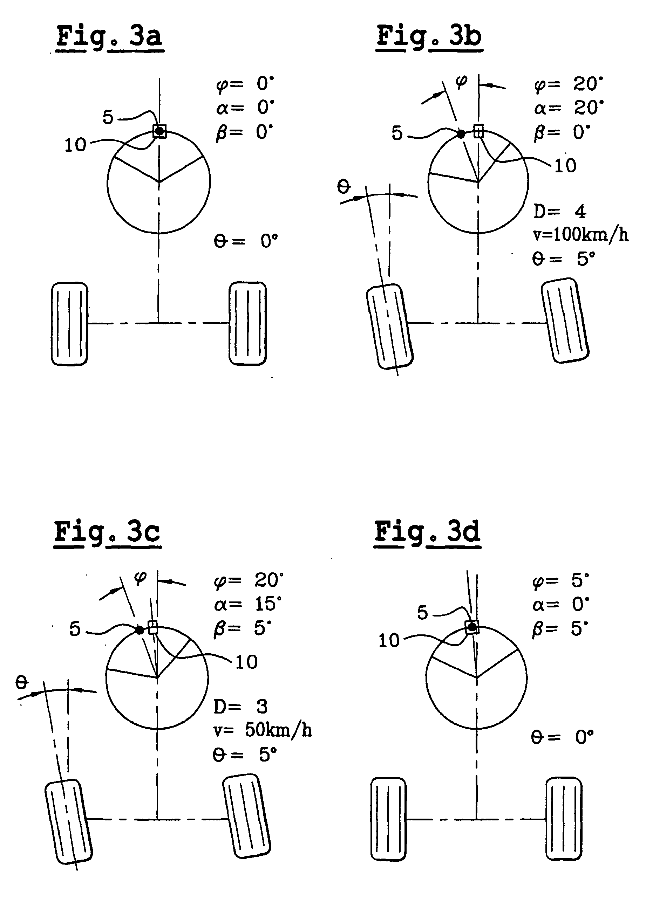

Les figures 3a à 3d illustrent le fonctionnement de l'invention. Ainsi, à la figure 3a, le volant est dans une position neutre, de sorte que le point fixe (5) se trouve confondu avec la position neutre (10) illustrée par un carré. Le point fixe (5) et la position neutre (10) sont alignées sur la direction fixe (6) ; l'angle de braquage est alors nul, comme illustré à la figure 3a.

Par la suite, un virage engagé à une première vitesse, par exemple 100 km/h, avec un rapport de démultiplication égal à 4. Le volant est alors pivoté d'un angle φ de 20 degrés, induisant un braquage des roues de 5 degrés, correspondant à la configuration illustrée en figure 3b. Aucune correction du rapport de démultiplication n'étant encore intervenue, la position du point neutre (10) reste la même et β vaut zéro.

Dans la courbe, la vitesse du véhicule est réduite par exemple à une vitesse de 50 km/h, pour lequel le rapport de démultiplication ne vaut plus que trois.

Dans ce cas, comme le conducteur a tendance à conserver le volant dans la même position, puisque la courbure du virage reste la même, l'angle de braquage (θ) aurait tendance à augmenter de 5° à 6.66°, si le dispositif, conformément à l'invention, n'effectuait pas l'action correctrice caractéristique. Cette action caractéristique permet de modifier la position du point neutre (10) en la décalant en direction du point fixe (5) du volant. Cette correction génère comme nouvelle valeur de la position neutre β la valeur de 5 degrés. La valeur de l'angle de rotation α du volant (soit φ - β) vaut alors de 15 degrés. Cela correspond avec le nouveau rapport de démultiplication D = 3 à un angle de braquage θ conservé à 5 degrés, comme illustré à la figure 3c. Autrement dit, la variation du rapport de démultiplication n'entraîne pas la modification de l'angle de braquage, ni la nécessité pour le chauffeur de modifier la position du volant.

Lorsque le véhicule quitte la courbe, le chauffeur ramène le volant dans la position neutre en réalignant le point fixe (5) sur la position neutre (10) telle qu'illustrée à la figure 3d. Globalement, entre les deux positions de lignes droites illustrées figures 3a et 3d, le point fixe du volant et la position correspondant se trouve décalée de 5 degrés.

Il ressort de ce qui précède que le dispositif de commande de braquage, conformément à l'invention, présente l'avantage essentiel de supprimer les désagréments dus à des braquages parasites que l'on observe lors des phases transitoires pendant lesquelles le rapport de démultiplication évolue, par exemple, pour tenir compte des variations de vitesse. Bien entendu, le principe de l'invention peut être appliqué à différents véhicules, soit des véhicules légers ou des véhicules lourds. Il peut également s'appliquer à des lois de calculs plus complexes que celles mettant en oeuvre un rapport de démultiplication, dès lors que la position neutre du volant est corrigée en conséquence.

## Revendications

1. Dispositif de commande de l'angle de braquage des roues directrices (25) d'un véhicule, dans un système de direction du type "Steer by Wire", comportant :

   • des moyens de détermination de la position angulaire mécanique (φ) du volant (1) du véhicule,
   • des moyens de détermination de l'angle de rotation (α) du volant (1) par comparaison de la position angulaire du volant (φ) avec une valeur de référence (β) représentative de la position neutre (10) du volant;
   • des moyens de commande d'un actionneur (26) agissant sur l'angle de braquage (θ) des roues directrices (25) selon une loi de calcul fonction de l'angle de rotation du volant (α)
   • des moyens de correction aptes à modifier ladite loi de calcul en fonction de la vitesse du véhicule

   **caractérisé** **en ce qu'**il comporte également des moyens aptes à modifier en fonction du temps la valeur de référence (β) représentative de la position neutre (10) du volant.

2. Dispositif selon la revendication 1, **caractérisé en ce que** l'angle de (θ) est calculé comme le quotient de l'angle de rotation du volant (α) par un coefficient de démultiplication (D)

3. Dispositif selon la revendication 1 **caractérisé en ce que** la valeur de référence (β) représentative de la position neutre du volant évolue de telle sorte que sa dérivée par rapport au temps ($\dfrac{d\beta}{dt}$) est proportionnelle au produit de la dérivée par rapport au temps ($\dfrac{dD}{dt}$) du coefficient de démultiplication multiplié par la valeur de l'angle de braquage (θ)

## Claims

1. A device for controlling the steer angle of the steered wheels (25) of a vehicle in a steering system of the "steer by wire" type, comprising:

   • means of determining the mechanical angular position (Φ) of the steering wheel (1) of the vehicle,
   • means of determining the rotation angle (α) of steering wheel (1) by comparing the angular position of the steering wheel (Φ) to a reference value (β) which is representative of the neutral position (10) of the steering wheel,
   • means of controlling an actuator (26) that influences the steer angle (θ) of the steered wheels (25) in accordance with a calculation law which depends on the rotation angle ($\alpha$) of the steering wheel,
• means of correction capable of modifying said calculation law depending on the speed of the vehicle,

**characterised in that** it also comprises means capable of modifying the value of reference value ($\beta$) which is representative of the neutral position (10) of the steering wheel as a function of time.

2. A device as claimed in claim 1, **characterised in that** angle ($\theta$) is calculated as the quotient of the rotation angle ($\alpha$) of the steering wheel and a demultiplication coefficient (D).

3. A device as claimed in claim 1, **characterised in that** reference value ($\beta$) which is representative of the neutral position of the steering wheel changes so that its time derivative ($\frac{d\beta}{dt}$) is proportional to the product of time derivative ($\frac{dD}{dt}$) of the demultiplication coefficient multiplied by the value of steer angle ($\theta$).

**Patentansprüche**

1. Vorrichtung zur Steuerung des Einschlagwinkels der Leiträder (25) eines Fahrzeugs in einem Lenksystem vom Typ "Steer by Wire", umfassend:

   • Mittel zur Bestimmung der mechanischen Winkelposition ($\varphi$) des Lenkrads (1) des Fahrzeugs,
   • Mittel zur Bestimmung des Einschlagwinkels ($\alpha$) des Lenkrads (1) durch einen Vergleich der Winkelposition des Lenkrads ($\varphi$) mit einem Referenzwert ($\beta$), der repräsentativ für die neutrale Position (10) des Lenkrads ist;
   • Mittel zur Steuerung einer Betätigungsvorrichtung (26), die auf den Einschlagwinkel ($\theta$) der Leiträder (25) gemäß einem Berechnungsgesetz einwirkt, das eine Funktion des Einschlagwinkels des Lenkrads ($\alpha$) ist;
   • Korrekturmittel, die geeignet sind, das Berechnungsgesetz in Abhängigkeit von der Geschwindigkeit des Fahrzeugs zu ändern,

   **dadurch gekennzeichnet, dass** sie auch Mittel umfasst, die geeignet sind, den Referenzwert ($\beta$), der repräsentativ für die neutrale Position (10) des Lenkrads ist, in Abhängigkeit von der Zeit zu ändern.

2. Vorrichtung nach Anspruch 1, **dadurch gekennzeichnet, dass** der Winkel ($\theta$) als Quotient des Einschlagwinkels des Lenkrads ($\alpha$) durch einen Untersetzungskoeffizienten (D) berechnet wird.

3. Vorrichtung nach Anspruch 1, **dadurch gekennzeichnet, dass** sich der Referenzwert ($\beta$), der repräsentativ für die neutrale Position des Lenkrads ist, derart verändert, dass seine Ableitung nach der Zeit ($\frac{d\beta}{dt}$) proportional zum Produkt der Ableitung nach der Zeit ($\frac{dD}{dt}$) des Untersetzungskoeffizienten, multipliziert mit dem Wert des Einschlagwinkels ($\theta$), ist.

## Fig. 1

## Fig. 2

$$\alpha = \varphi - \beta$$

$$D(v)$$

$$\frac{d\beta}{dt} = k \cdot \frac{dD}{dt} \times \theta$$

$$\theta = \alpha / D$$

## Fig. 3a

$\varphi = 0^{\circ}$
$\alpha = 0^{\circ}$
$\beta = 0^{\circ}$

$\theta = 0^{\circ}$

## Fig. 3b

$\varphi = 20^{\circ}$
$\alpha = 20^{\circ}$
$\beta = 0^{\circ}$

$D = 4$
$v = 100 km/h$
$\theta = 5^{\circ}$

## Fig. 3c

$\varphi = 20^{\circ}$
$\alpha = 15^{\circ}$
$\beta = 5^{\circ}$

$D = 3$
$v = 50 km/h$
$\theta = 5^{\circ}$

## Fig. 3d

$\varphi = 5^{\circ}$
$\alpha = 0^{\circ}$
$\beta = 5^{\circ}$

$\theta = 0^{\circ}$